# EUROPÄISCHE PATENTSCHRIFT

(11) **EP 2 318 225 B1**
(45) Veröffentlichungstag und Bekanntmachung des Hinweises auf die Patenterteilung: **09.01.2013**
(21) Anmeldenummer: 09777423.6
(22) Anmeldetag: 24.07.2009
(51) Int. Cl.: B60J 5/04

(54) **TÜRANORDNUNG UND MONTAGEVERFAHREN FÜR EINE TÜRANORDNUNG**
DOOR ARRANGEMENT AND ASSEMBLY METHOD FOR A DOOR ARRANGEMENT
AGENCEMENT DE PORTIERE ET PROCEDE DE MONTAGE POUR UN AGENCEMENT DE PORTIERE

(30) Priorität: 28.07.2008 DE 102008035173
(43) Veröffentlichungstag der Anmeldung: 11.05.2011
(73) Patentinhaber: Johnson Controls GmbH, 51399 Burscheid (DE)
(72) Erfinder: ZAGROMSKI, Frank, 58453 Witten (DE)
(74) Vertreter: Schwöbel, Thilo K.
(86) Internationale Anmeldenummer: PCT/EP2009/005385
(87) Internationale Veröffentlichungsnummer: WO 2010/012422

(56) Entgegenhaltungen:
- DE-A1- 19 712 266
- DE-A1-102006 058 397
- DE-U1-202006 012 577

## Beschreibung

Die Erfindung betrifft eine Türanordnung mit einem ersten Trägerelement und einem zweiten Trägerelement, wobei das erste Trägerelement ein erstes Türmodul und das zweite Trägerelement ein zweites Türmodul aufweist, wobei das erste Türmodul mittels Befestigungsmittel lösbar am ersten Trägerelement befestigt ist und wobei das erste Türmodul ein erstes Koppelelement und das zweite Türmodul ein zweites Koppelelement aufweist.

Solche Türanordnungen sind allgemein bekannt. Beispielsweise ist aus der DE 197 12 266 A1 eine Kraftfahrzeugtür mit einem Rohbau-Türkörper und einem Innenverkleidungskörper bekannt, wobei sowohl der Rohbau-Türkörper, als auch der Innenverkleidungskörper Funktionsbauteile aufweist, welche mittels einer zentralen Steckverbindung miteinander verbunden werden, wobei die zentrale Steckverbindung einen Stecker am Innenverkleidungskörper und einen entsprechenden Gegenstecker am Rohbau-Türkörper aufweist und wobei während der Montage des Innenverkleidungskörpers am Rohbau-Türkörper in y-Richtung des Fahrzeugs der Stecker mit dem Gegenstecker in Eingriff gelangt. Durch die Fixierung des Steckers am Rohbau-Türkörper und der Fixierung des Gegensteckers am Innenverkleidungsteil sind die Anforderungen an die Herstellungstoleranzen vergleichsweise hoch, da bei der Montage des Innenverkleidungskörpers automatisch die Steckverbindung hergestellt wird. Eine nur geringe Ortsabweichung zwischen Stecker und Gegenstecker führt dazu, dass keine funktionale Kopplung zwischen Stecker und Gegenstecker hergestellt wird. Bei der Montage des Innenverkleidungsteils ist dies kaum detektierbar, da die Steckverbindung von außerhalb des Türinnenraums nicht einsehbar und in der Regel auch nicht erreichbar ist. Dieses Problem wird durch eine toleranzausgleichende Aufhängung des Gegensteckers, wie beispielsweise durch eine schwimmende Lagerung, noch verstärkt, da ein Nachgeben des Steckers in y-Richtung die Gefahr der Nicht-Kopplung zwischen Stecker und Gegenstecker deutlich erhöht.

Aufgabe der vorliegenden Erfindung ist es, eine Türanordnung bereit zu stellen, die zum einen leicht und kostengünstig montierbar ist, zum anderen eine zuverlässige und verifizierbare funktionale Verbindung zwischen dem ersten und dem zweiten Koppelelement bei der Montage des zweiten Trägerelements am ersten Trägerelement gewährleistet und ferner die Nachteile des Standes der Technik nicht aufweist.

Die Aufgabe wird gelöst durch eine Türanordnung mit einem ersten Trägerelement und einem zweiten Trägerelement, wobei das erste Trägerelement ein erstes Türmodul und das zweite Trägerelement ein zweites Türmodul aufweist, wobei das erste Türmodul mittels Befestigungsmittel lösbar am ersten Trägerelement befestigt ist, wobei das erste Türmodul ein erstes Koppelelement und das zweite Türmodul ein zweites Koppelelement aufweist und wobei femer das zweite Türmodul Entriegelungselemente aufweist, welche zum Lösen der Befestigungsmittel im Falle einer Kopplung des ersten Koppelelements mit dem zweiten Koppelelement vorgesehen sind. Hierdurch ist es vorteilhaft möglich, dass das erste Türmodul mittels der Fixierung durch das Befestigungsmittel am ersten Trägerelement vor der Montage des zweiten Trägerelements an dem ersten Trägerelement in einer ersten Position, insbesondere einer Montageposition, vorfixiert wird, welche gegenüber einer zweiten Position, insbesondere einer Endposition, senkrecht zu einer Türebene des ersten Trägerelements in Richtung des zweiten Trägerelements exponiert ist. Bei einer Montagebewegung des zweiten Trägerelements senkrecht zur Türebene in Richtung des ersten Trägerelements erfolgt somit zunächst eine sichere Kopplung der ersten und der zweiten Kopplungselemente, welche beispielsweise durch Verrasten oder Klickgeräusche während des Montagevorgangs wahrnehmbar sind oder durch einen Abstand zwischen dem ersten und dem zweiten Trägerelement von außerhalb der Türe einsehbar sind. Während der Kopplung erfolgt gleichzeitig eine mittelbare und/oder unmittelbare Entriegelung der Befestigungsmittel durch die Entriegelungselemente, so dass bei einer weiteren Montagebewegung des zweiten Trägerelements in Richtung des ersten Trägerelements das erste Trägermodul in die zweite Position bzw. in die Endposition bewegbar ist, in welcher das erste Türmodul nicht mehr mit den Befestigungsmitteln bzw. mit dem ersten Trägerelement gekoppelt ist und gegenüber der ersten Position näher am ersten Trägerelement angeordnet ist. Eine Kopplung des ersten und des zweiten Kopplungselements im Sinne der vorliegenden Erfindung umfasst sowohl eine funktionale Kopplung zwischen dem ersten und dem zweiten Kopplungselements, welche insbesondere eine mechanische und/oder elektrische Kopplung zwischen Funktionsbauteilen der Türe umfasst, als auch eine rein statische Kopplung zur Befestigung des ersten Türmoduls am zweiten Türmodul beispielsweise durch Verrasten des ersten Kopplungselements mit dem zweiten Kopplungselement. Funktionsbauteile sind insbesondere Bauelemente für eine Fahrzeugtür, wie Fensterheber, Türschlösser, Türgriffe, elektrische Verbindungselemente, wie beispielsweise Türsteuergeräte und/oder Fensterheberschalter, und/oder Sicherheitseinrichtungen, wie beispielsweise Sensoren, Seitenaufprallschutz und/oder Airbags.

Erfindungsgemäß ist es bevorzugt, dass die Befestigungsmittel erste und zweite Befestigungsmodule umfassen, wobei die ersten Befestigungsmodule zur Fixierung des ersten Türmoduls parallel zu einer Türebene und die zweiten Befestigungsmodule zur Fixierung des ersten Türmoduls senkrecht zur Türebene vorgesehen sind und wobei bevorzugt die Entriegelungselemente zum Lösen der zweiten Befestigungsmodule vorgesehen sind und wobei besonders bevorzugt eine Aufhebung der Fixierung des ersten Türmoduls durch die ersten Befestigungsmodule bei einem Lösen der zweiten Befestigungsmodule vorgesehen ist. Hierdurch ist es vorteilhaft möglich, dass durch die zweiten Befestigungsmodule das erste Türmodul in Montagerichtung des zweiten Trägerelements zuverlässig fixiert wird, so dass insbesondere bei der Herstellung der Kopplung zwischen dem ersten und dem zweiten Kopplungselements ein "Nachgeben" des ersten Türmodul in Montagerichtung unterbunden wird und somit in besonders sichere Weise eine zuverlässige Kopplung gewährleistet wird. Ferner wird somit besonders vorteilhaft allein durch das Lösen des zweiten Befestigungsmoduls das erste Türmodul auch parallel zur Türebene durch die ersten Befestigungsmodule freigegeben, so dass lediglich die ersten Befestigungsmodule durch die Entriegelungselemente gelöst werden müssen.

Erfindungsgemäß ist es femer bevorzugt, dass die zweiten Befestigungsmodule zumindest einen am ersten Trägerelement befestigten Rastarm umfassen, welcher mit einem Rastelement am zweiten Türmodul in Rasteingriff bringbar ist, und wobei die Entriegelungselemente wenigstens eine Rampe umfassen, welche zur Verbiegung des Rastarms im Falle der Kopplung vorgesehen ist, so dass besonders vorteilhaft der Rastarm durch die Rampe derart reversibel verbogen wird, dass der Rastarm von dem Rastelement beabstandet wird und somit das erste Türmodul von dem zweiten Befestigungsmodul auf vergleichsweise einfache Art und Weise freigegeben wird.

Erfindungsgemäß ist es femer bevorzugt, dass die ersten Befestigungsmodule im Wesentlichen als zumindest teilweise geöffnete Kegel ausgebildet sind, welche vorzugsweise mit der Grundfläche am ersten Trägerelement befestigt sind und zur Aufnahme von Befestigungselementen des ersten Türmoduls vorgesehen sind. Die kegelförmige Ausbildung der ersten Befestigungsmodule ermöglicht in vorteilhafter Weise eine Fixierung der Befestigungselemente in der ersten Position und eine Freigabe der Befestigungselemente in der zweiten Position, wobei in der ersten Position die Befestigungselemente im stärker verjüngten Teil des Kegels angeordnet sind und durch die Verjüngung des Kegels parallel zur Türebene fixiert werden und wobei in der zweiten Position die Befestigungselemente näher in Richtung des ersten Trägerelements im Kegel angeordnet sind und somit im weniger verjüngten Teil des Kegels nicht mehr durch die Verjüngung parallel zur Türebene fixiert werden. Ein zumindest teilweise geöffneter Kegel im Sinne der vorliegenden Erfindung umfasst einen Kegel, welcher eine Grundfläche des Kegels mit einem nicht vollständigen Kreis aufweist. Beispielsweise umfasst die Grundfläche einen Halbkreis oder einen Viertelkreis. Für einen Fachmann ist selbstverständlich, dass eine im Wesentlichen kegelförmige Ausbildung auch alle im weitesten Sinne kegelähnlichen ersten Befestigungsmodule umfasst, wobei der Querschnitt des Befestigungsmoduls zur Aufnahme des Befestigungselements näher am ersten Trägerelement im Wesentlichen größer ist, als in einem Bereich des ersten Befestigungselements, welcher weiter vom ersten Trägerelement beabstandet ist.

Erfindungsgemäß ist es femer bevorzugt, dass am ersten Türmodul erste Führungselemente und am zweiten Türmodul zweite Führungselemente angeordnet sind, wobei bevorzugt im Falle einer Kopplung ein Ineinandergreifen der ersten und der zweiten Führungselemente zur Fixierung der Relativposition des ersten und des zweiten Türmoduls parallel zur Türebene vorgesehen ist und wobei die ersten und zweiten Führungselemente besonders bevorzugt zur selbstfindenden Montage des zweiten Trägerelements am ersten Trägerelement senkrecht zur Türebene vorgesehen ist. Hierdurch ist es vorteilhaft möglich, dass die Montagebewegung des zweiten Trägerelements in Richtung des ersten Trägerelements durch das Ineinanderführen der zweiten Führungselemente in den ersten Führungselement geführt wird und somit eine Relativposition zwischen dem ersten und zweiten Trägerelement parallel zur Türebene festgelegt wird. Der Montagevorgang des zweiten Trägerelements wird somit in erheblicher Weise vereinfacht.

Erfindungsgemäß ist es femer bevorzugt, dass das zweite Trägerelement ein Innenverkleidungsteil und das zweite Türmodul wenigstens einen Türgriff umfassen, wobei vorzugsweise das erste Trägerelement einen Aggregatträger und das erste Türmodul einen Betätigungsmechanismus umfassen, so dass besonders bevorzugt die Verbindung des insbesondere am Innenverkleidungsteil vormontierten Türgriffs mit dem insbesondere am Aggregatträger vormontierten Betätigungsmechanismus bei der Montage des Innenverkleidungsteils am Aggregatträger erheblich vereinfacht wird, da der Betätigungsmechanismus an dem Aggregatträger wie oben beschrieben in der ersten Position lösbar befestigt wird und beim Koppeln mit dem Türgriff am Innenverkleidungsteil in die zweite Position verschoben wird, wobei der Betätigungsmechanismus gleichzeitig vom Aggregatträger gelöst wird. Anschließend wird das Innenverkleidungsteil mit dem Aggregatträger verbunden, wobei eine Kopplung des ersten Türmoduls mit dem zweiten Türmodul im Sinne der vorliegenden Erfindung insbesondere eine funktionale Verbindung zwischen dem Türgriff und dem Betätigungsmechanismus umfasst, so dass beispielsweise eine Betätigung der Türgriffs die Aktivierung des Betätigungsmechanismus erzeugt.

Ein weiterer Gegenstand der vorliegenden Erfindung ist ein Montageverfahren für eine Türanordnung, wobei in einem ersten Montageschritt ein erstes Türmodul mittels Befestigungsmittel lösbar an einem ersten Trägerelement in einer ersten Position befestigt wird, wobei in einem zweiten Montageschritt ein zweites Türmodul an einem zweiten Trägerelement befestigt wird und wobei in einem dritten Montageschritt ein erstes Koppelelement des ersten Türmoduls mit einem zweiten Koppelelement des zweiten Türmoduls gekoppelt wird und wobei ferner in einem vierten Montageschritt die Befestigungsmittel durch Entriegelungselemente am zweiten Türmoduls gelöst werden und das erste Türmodul in einer von der ersten Position verschiedenen zweiten Position positioniert wird. Hierdurch wird die Montage des ersten Trägerelements am zweiten Trägerelement im Vergleich zum Stand der Technik in erheblicher Weise vereinfacht und die Kopplung des ersten Koppelelements mit dem zweiten Koppelelement deutlich zuverlässiger und während des Montageprozesses verifizierbar realisiert. Dies wird dadurch erreicht, dass zur Herstellung der Kopplung des ersten Kopplungselements und des zweiten Kopplungselements das ersten Türmodul in der ersten Position am ersten Trägerelement fixiert ist und bei der endgültigen Befestigung des ersten Trägerelements am zweiten Trägerelement das erste Trägerelement in der zweiten Position angeordnet und die Fixierung am ersten Trägerelement aufgehoben wird, so dass im Montagprozess zunächst die ordnungsgemäße Kopplung zwischen erstem und zweiten Kopplungselement herstellbar und verifizierbar ist und erst anschließend das erste und das zweite Trägerelement endgültig miteinander verbunden werden.

Erfindungsgemäß ist es bevorzugt, dass das erste Türmodul im vierten Montageschritt außer Eingriff mit den Befestigungsmitteln gebracht wird und durch das zweite Türmodul in der zweiten Position fixiert wird, wobei bevorzugt das erste Türmodul durch die Kopplung des ersten Kopplungselements mit dem zweiten Kopplungselements am zweiten Türmodul fixiert wird, so dass in vorteilhafter Weise das erste Türmodul in der Endposition nicht mit dem ersten Trägerelement verbunden ist, so dass die Fertigungstoleranzen für das erste Trägerelement deutlich reduzierbar sind und somit die Herstellungskosten gesenkt werden.

Erfindungsgemäß ist es femer bevorzugt, dass im dritten und im vierten Montageschritt das zweite Trägerelement senkrecht zu einer Türebene in Richtung des ersten Trägerelements bewegt wird und/oder in einem auf den vierten Montageschritt folgenden fünften Montageschritt das zweite Trägerelement mit dem ersten Trägerelement insbesondere lösbar verbunden wird. Hierdurch ist besonders vorteilhaft eine vergleichsweise einfache und kostengünstige Montage des zweiten Trägerelements mit dem ersten Trägerelement möglich, da im Wesentlichen allein durch Bewegung des zweiten Trägerelements senkrecht zur Türebene, d.h. in Montagerichtung, sowohl eine Kopplung des ersten und des zweiten Trägerelements, ein Lösen der Befestigungsmittel, eine Verschiebung des ersten Türmoduls von der ersten in die zweite Position und eine Befestigung des zweiten Trägermoduls am ersten Trägermodul erfolgt.

Erfindungsgemäß ist es ferner bevorzugt, dass im vierten Montageschritt von dem ersten Türmodul eine Bewegung senkrecht zur Türebene und insbesondere in Richtung des ersten Trägerelements durchgeführt wird, so dass die senkrecht zur Türebene gegenüber dem ersten Trägerelement exponierte erste Position zur Einleitung und Sicherung der Kopplung zwischen dem ersten und dem zweiten Kopplungselements realisierbar ist und ferner in der zweiten Position das erste Türmoduls vergleichsweise bauraumkompakt näher am ersten Trägerelement anzuordnen ist.

Erfindungsgemäß ist es femer bevorzugt, dass im dritten Montageschritt eine funktionale Verbindung zwischen dem ersten und dem zweiten Türmodul hergestellt wird, so dass die Funktion der Kopplung zwischen dem ersten und dem zweiten Kopplungselement vor dem Befestigen des zweiten Trägerelements am ersten Trägerelements verifizierbar ist.

Ausführungsbeispiele der Erfindung sind in der Zeichnung dargestellt und in der nachfolgenden Beschreibung näher erläutert.

Es zeigen
**Figuren 1 und 2** eine schematische Perspektivansicht einer erfindungsgemäßen Türanordnung zeitlich vor Durchführung der Montageschritte,
**Figur 3** eine schematische Perspektivansicht eines zweiten Türmoduls einer erfindungsgemäßen Türanordnung,
**Figuren 4** eine schematische Perspektivansicht eines ersten Türmoduls einer erfindungsgemäßen Türanordnung und
**Figur 5** eine schematische Seitenansicht einer erfindungsgemäßen Türanordnung zeitlich nach der Durchführung der Montageschritte.

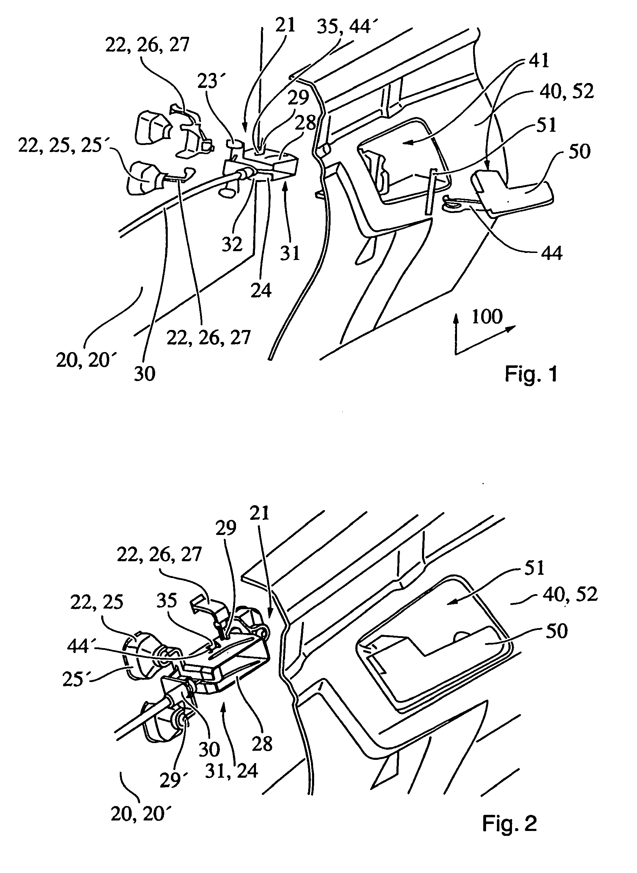

In **Figur 1** ist ein erstes Trägerelement 20, insbesondere in Form eines Aggregatträgers 20' für eine Fahrzeugtür, mit Befestigungsmitteln 22 dargestellt, wobei die Befestigungsmittel 22 erste Befestigungsmodule 25 umfassen, welche im Wesentlichen in Form eines geöffneten Kegels 25' ausgebildet sind, welche mit der Grundfläche am ersten Trägerelemente 20 befestigt sind und sich senkrecht zu einer Türebene 100 des ersten Trägerelements 20 mit wachsendem Abstand vom ersten Trägerelement 20 verjüngen, wobei die Grundfläche bzw. der Querschnitt des Kegels 25' im Wesentlichen einen Halbkreis beschreibt. Ferner umfassen die Befestigungsmittel 22 zweite Befestigungsmodule 26 in Form von zwei Rastarmen 27, welche von dem ersten Trägerelement 20 senkrecht zur Türebene 100 in Richtung eines zweiten Trägerelements 40 abstehen. Ferner ist in Figur 1 ein erstes Türmodul 21 dargestellt, welches Rastelemente 29 aufweist, welche zur Verrastung mit den Rastarmen 27 und somit zur Fixierung des ersten Türmoduls 21 in einer ersten Position in späteren Montageschritten ausgebildet sind. Das erste Türmoduls 21 umfasst Befestigungselemente 29', welche in späteren Montageschritten von den ersten Befestigungsmodulen 25 aufgenommen werden, und einen Betätigungsmechanismus 31, welcher einen Bowdenzug 30 zur Steuerung eines nicht abgebildeten Türschlosses betätigt. Ferner weist das erste Türmodul 21 einen Rahmen 32 und erste Führungselemente 28 an dem Rahmen 32 auf. Das zweite Trägerelement 40 umfasst eine Innenraumverkleidung 52 mit einer Öffnung 51 zur Aufnahme eines Türgriffs 50, wobei der Türgriff 50 insbesondere in einer Richtung senkrecht zur Türebene 100 in die Öffnung 51 eingesteckt wird und optional zur Verrastung mit dem zweiten Trägerelemente 40 ausgebildet ist. Der Türgriff 50 umfasst ein zweiten Koppelelement 44 in Form eines Betätigungshebels, welcher zur Kopplung mit einem ersten Koppelelement 24 des ersten Türmoduls 21 bzw. des Betätigungsmechanismus 31 derart ausgebildet ist, dass durch eine funktionale Verbindung zwischen dem ersten und dem zweiten Koppelelemente 24, 48 der Betätigungsmechanismus 31 durch Betätigung des Türgriffs 50 betätigt wird.

In **Figur 2** ist der Türgriff 50 nach Durchführung eines zweiten Montageschrittes in der Öffnung 50 des zweiten Trägerelements 40 angeordnet. Das erste Türmodul 21 ist ferner an dem ersten Trägerelement 20 mittels der Befestigungsmittel 22 in einem ersten Montageschritt lösbar in einer ersten Position bzw. in einer Montageposition vorfixiert, wobei die Befestigungselemente 29' in einem maximale verjüngten Teil der ersten Befestigungsmodule 25 derart angeordnet ist, dass die Verjüngung eine Bewegung des ersten Türmoduls 21 parallel zur Türebene 100 unterbinden. Eine Fixierung des ersten Türmoduls 21 parallel zur Türebene 100 wird durch eine Verrastung der Rastarme 27 mit den Rastelementen 29 erzielt.

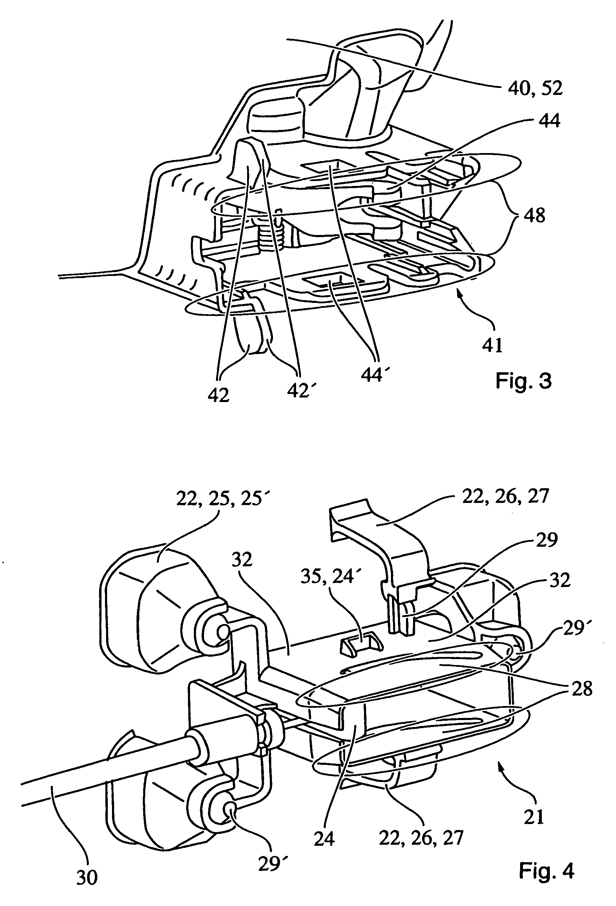

In **Figur 3** ist eine Ansicht des zweiten Trägerelements 40 zusammen mit dem zweiten Türmodul 41 von dem ersten Trägerelement 20 aus dargestellt, wobei das zweite Koppelelemente 44 in Form des Betätigungshebels und zweite Führungselemente 48 illustriert sind, wobei die zweiten Führungselemente 48 beim Montieren des zweiten Trägerelements 40 am ersten Trägerelement 20 in Eingriff mit den ersten Führungselement 28 bringbar sind, so dass die zweiten Führungselemente 48 die ersten Führungselemente 28 parallel zur Türebene 100 umschließen und somit eine Relativposition des zweiten Trägerelementes 40 relativ zum ersten Trägerelement 20 festlegen. Das zweite Türmodul 41 weist femer Entriegelungselemente 42 auf, welche zum Lösen der Rastarme 27 beim Koppeln des ersten Koppelelements 24 mit dem zweiten Koppelelement 48 vorgesehen sind. Dies wird durch eine Rampe 42' auf einer dem zweiten Trägerelement 40 zugewandten Seite der Entriegelungselemente 42 erreicht, welche bei einer Bewegung des zweiten Türmoduls 41 in Richtung des ersten Türmoduls 21 senkrecht zur Türebene 100 die Rastarme 27 derart verbiegen, dass sie außer Eingriff mit den Rastelementen 29 kommen und somit das erste Türmodul 21 in der Montagerichtung senkrecht zur Türebene 100 nicht mehr fixiert ist und somit das erste Türmodul 21 in eine zweite Position näher zum ersten Trägerelement 20 hin überführbar ist, wobei aufgrund der Verjüngung der ersten Befestigungsmodule 25 mit steigendem Abstand von dem ersten Trägerelement 20 die Befestigungselemente 29' bei einer Verlagerung des ersten Türmoduls 21 in Richtung des ersten Trägerelements 20 nicht mehr parallel zur Türebene 100 fixiert sind und somit das erste Türmodul 21 von dem ersten Trägerelement 20 entkoppelt wird. Das zweite Türmodul 40 weist femer ein weiteres zweites Koppelelement 44' auf, welches eine Öffnung zur Aufnahme eines weiteren ersten Koppelelements 24' in Form einer Rastnase 35 am ersten Türmodul 21 ausgebildet ist, so dass eine mechanische feste Verbindung zwischen dem ersten und dem zweiten Türmodul 21, 41 durch Koppeln bzw. Verrasten der weiteren ersten und der weiteren zweiten Koppelelemente 24', 44' realisiert wird.

In **Figur 4** ist eine Vergrößerung des ersten Türmoduls 21 zusammen mit dem ersten Trägerelement 20 ähnlich der Figur 2 abgebildet, wobei die Positionierung des ersten Türmoduls 21 am ersten Trägerelement 20 in der ersten Position bzw. in der Montageposition dargestellt ist.

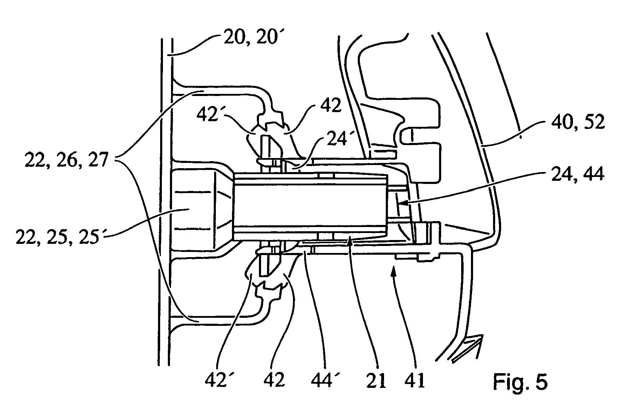

In **Figur 5** ist eine schematische Seitenansicht der Türanordnung in der montierten Position dargestellt, wobei das erste Türmodul 21 mit dem zweiten Türmodul 41 mittels der weiteren ersten und der weiteren zweiten Koppelelemente 24', 48' nach Durchführung eines dritten Montagschrittes mechanisch fest verbunden sind, wobei die Entriegelungselemente 42 eine Verbiegung der zweiten Befestigungselemente 26 bzw. der Rastarme 27 in einem vierten Montageschritt erzeugen, wodurch die Rastarme 27 von den Rastelementen 29 beabstandet sind, wobei die Befestigungselemente 29' derart in den zweiten Befestigungsmodulen 25 angeordnet sind, dass die Befestigungselemente 29' von den zweiten Befestigungsmodulen 25 entkoppelt sind, wobei ferner im vierten Montageschritt das erste Türmodul 21 von der ersten Position in eine zweite Position überführt worden ist und wobei im dritten Montagschritt das erste Koppelelement 24 mit dem zweiten Koppelelement 44 derart gekoppelt wird, dass mittels des Türgriffs 50 über den Betätigungsmechanismus 31 der Bowdenzug 30 zu betätigen ist. In einem nachfolgenden fünften Montagschritt wird optional das erste und das zweite Trägerelement 20, 40 insbesondere lösbar miteinander mechanisch fest verbunden.

### Bezugszeichenliste

- 1: Türanordnung
- 20: Erstes Trägerelement
- 20': Aggregatträger
- 21: Erstes Türmodul
- 22: Befestigungsmittel
- 24, 24': Erstes Koppelelement
- 25: Erste Befestigungsmodule
- 25': Kegel
- 26: Zweite Befestigungsmodule
- 27: Rastarm
- 28: Zweite Führungselemente
- 29: Rastelemente
- 29': Befestigungselemente
- 31: Betätigungsmechanismus
- 32: Rahmen
- 35: Rastnase
- 40: Zweites Trägerelement
- 41: Zweites Türmodul
- 42: Entriegelungselemente
- 42': Rampe
- 44, 44': Zweites Koppelelement
- 48: Erste Führungselemente
- 50: Türgriff
- 52: Innenverkleidungsteil
- 100: Türebene

## Patentansprüche

1. Türanordnung (1) mit einem ersten Trägerelement (20) und einem zweiten Trägerelement (40), wobei das erste Trägerelement (20) ein erstes Türmodul (21) und das zweite Trägerelement (40) ein zweites Türmodul (41) aufweist, wobei das erste Türmodul (21) mittels Befestigungsmittel (22) lösbar am ersten Trägerelement (20) befestigt ist, wobei das erste Türmodul (21) ein erstes Koppelelement (24, 24') und das zweite Türmodul (41) ein zweites Koppelelement (44, 44') aufweist, **dadurch gekennzeichnet, dass** das zweite Türmodul (41) Entriegelungselemente (42) aufweist, welche zum Lösen der Befestigungsmittel (22) im Falle einer Kopplung des ersten Koppelelements (24, 24') mit dem zweiten Koppelelement (44, 44') vorgesehen sind.

2. Türanordnung (1) nach Anspruch 1, **dadurch gekennzeichnet, dass** die Befestigungsmittel (22) erste und zweite Befestigungsmodule (25, 26) umfassen, wobei die ersten Befestigungsmodule (25) zur Fixierung des ersten Türmoduls (21) parallel zu einer Türebene (100) und die zweiten Befestigungsmodule (26) zur Fixierung des ersten Türmoduls (21) senkrecht zur Türebene (100) vorgesehen sind und wobei bevorzugt die Entriegelungselemente (42) zum Lösen der zweiten Befestigungsmodule (26) vorgesehen sind und wobei besonders bevorzugt eine Aufhebung der Fixierung des ersten Türmoduls (21) durch die ersten Befestigungsmodule (25) bei einem Lösen der zweiten Befestigungsmodule (26) vorgesehen ist.

3. Türanordnung (1) nach Anspruch 2, **dadurch gekennzeichnet, dass** die zweiten Befestigungsmodule (26) zumindest einen am ersten Trägerelement (20) befestigten Rastarm (27) umfassen, welcher mit einem Rastelement (29) am ersten Türmodul (21) in Rasteingriff bringbar ist, und wobei die Entriegelungselemente (42) wenigstens eine Rampe (42') umfassen, welche zur Verbiegung des Rastarms (27) im Falle der Kopplung vorgesehen ist.

4. Türanordnung (1) nach einem der Ansprüche 2 oder 3, **dadurch gekennzeichnet, dass** die ersten Befestigungsmodule (25) im Wesentlichen als zumindest teilweise geöffnete Kegel (25') ausgebildet sind, welche
vorzugsweise mit der Grundfläche am ersten Trägerelement (20) befestigt sind und zur Aufnahme von Befestigungselementen (29') des ersten Türmoduls (21) vorgesehen sind.

5. Türanordnung (1) nach einem der vorhergehenden Ansprüche, **dadurch gekennzeichnet, dass** am ersten Türmodul (21) erste Führungselemente (28) und am zweiten Türmodul (41) zweite Führungselemente (48) angeordnet sind, wobei bevorzugt im Falle einer Kopplung ein Ineinandergreifen der ersten und der zweiten Führungselemente (28, 48) zur Fixierung der Relativposition des ersten und des zweiten Trägerelements (20, 40) parallel zur Türebene (100) vorgesehen ist und wobei die ersten und die zweiten Führungselemente (28, 48) besonders bevorzugt zur selbstfindenden Montage des zweiten Trägerelements (40) am ersten Trägerelement (20) senkrecht zur Türebene (100) vorgesehen ist.

6. Türanordnung (1) nach einem der vorhergehenden Ansprüche, **dadurch gekennzeichnet, dass** das zweite Trägerelement (40) ein Innenverkleidungsteil (52) und das zweite Türmodul (41) wenigstens einen Türgriff (50) umfassen, wobei vorzugsweise das erste Trägerelement (20) einen Aggregatträger (20') und das erste Türmodul (21) einen Betätigungsmechanismus (31) umfassen.

7. Montageverfahren für eine Türanordnung (1), insbesondere nach einem der vorhergehenden Ansprüche, wobei in einem ersten Montageschritt ein erstes Türmodul (21) mittels Befestigungsmittel (22) lösbar an einem ersten Trägerelement (20) in einer ersten Position befestigt wird, wobei in einem zweiten Montageschritt ein zweites Türmodul (42) an einem zweiten Trägerelement (20) befestigt wird und wobei in einem dritten Montageschritt ein erstes Koppelelement (24) des ersten Türmoduls (21) mit einem zweiten Koppelelement (44) des zweiten Türmoduls (42) gekoppelt wird, **dadurch gekennzeichnet, dass** in einem vierten Montageschritt die Befestigungsmittel (22) durch Entriegelungselemente (42) am zweiten Türmodul (40) gelöst werden und das erste Türmodul (20) in einer von der ersten Position verschiedenen zweiten Position positioniert wird.

8. Montageverfahren nach Anspruch 7, **dadurch gekennzeichnet, dass** das erste Türmodul (21) im vierten Montageschritt außer Eingriff mit den Befestigungsmitteln (22) gebracht wird und durch das zweite Türmodul (41) in der zweiten Position fixiert wird, wobei bevorzugt das erste Türmodul (21) durch die Kopplung des ersten Kopplungselements (24, 24') mit dem zweiten Kopplungselements (44, 44') am zweiten Türmodul (41) fixiert wird.

9. Montageverfahren nach einem der Ansprüche 7 oder 8, **dadurch gekennzeichnet, dass** im dritten und im vierten Montageschritt das zweite Trägerelement (40) senkrecht zu einer Türebene (100) in Richtung des ersten Trägerelements (20) bewegt wird und/oder in einem auf den vierten Montageschritt folgenden fünften Montageschritt das zweite Trägerelement (40) mit dem ersten Trägerelement (20) insbesondere lösbar verbunden wird.

10. Montageverfahren nach einem der Ansprüche 7 bis 9, **dadurch gekennzeichnet, dass** im vierten Montageschritt von dem ersten Türmodul (21) eine Bewegung senkrecht zur Türebene (100) und insbesondere in Richtung des ersten Trägerelements (20) durchgeführt wird.

11. Montageverfahren nach einem der Ansprüche 7 bis 10, **dadurch gekennzeichnet, dass** im dritten Montageschritt eine funktionale Verbindung zwischen dem ersten und dem zweiten Türmodul (21, 41) hergestellt wird.

## Claims

1. A door arrangement (1) having a first carrier element (20) and a second carrier element (40), the first carrier element (20) having a first door module (21) and the second carrier element (40) having a second door module (41), the first door module (21) being fastened releasably to the first carrier element (20) by means of fastening means (22), the first door module (21) having a first coupling element (24, 24') and the second door module (41) having a second coupling element (44, 44'), **characterized in that** the second door module (41) has unlocking elements (42) which are provided for releasing the fastening means (22) in the case of the first coupling element (24, 24') being coupled to the second coupling element (44, 44').

2. The door arrangement (1) as claimed in claim 1, **characterized in that** the fastening means (22) comprise first and second fastening modules (25, 26), the first fastening modules (25) being provided for fixing the first door module (21) parallel to a door plane (100) and the second fastening modules (26) being provided for fixing the first door module (21) perpendicularly with respect to the door plane (100), and the unlocking elements (42) preferably being provided for releasing the second fastening modules (26), and, particularly preferably, canceling of the fixing of the first door module (21) by way of the first fastening modules (25) being provided in the case of a release of the second fastening modules (26).

3. The door arrangement (1) as claimed in claim 2, **characterized in that** the second fastening modules (26) comprise at least one latching arm (27) which is fastened to the first carrier element (20) and can be brought into latching engagement with a latching element (29) on the first door module (21), and the unlocking elements (42) comprising at least one ramp (42') which is provided for bending the latching arm (27) in the case of coupling.

4. The door arrangement (1) as claimed in either of claims 2 and 3, **characterized in that** the first fastening modules (25) are configured substantially as at least partially open cones (25') which are preferably fastened by way of the base area to the first carrier element (20) and are provided for receiving fastening elements (29') of the first door module (21).

5. The door arrangement (1) as claimed in one of the preceding claims, **characterized in that** first guide elements (28) are arranged on the first door module (21) and second guide elements (48) are arranged on the second door module (41), engagement of the first and the second guide elements (28, 48) into one another preferably being provided in the case of coupling for fixing the relative position of the first and the second carrier elements (20, 40) parallel to the door plane (100), and the first and the second guide elements (28, 48) particularly preferably being provided for the self-finding assembly of the second carrier element (40) on the first carrier element (20) perpendicularly with respect to the door plane (100).

6. The door arrangement (1) as claimed in one of the preceding claims, **characterized in that** the second carrier element (40) comprises an inner trim part (52) and the second door module (41) comprises at least one door handle (50), the first carrier element (20) preferably comprising an assembly carrier (20') and the first door module (21) preferably comprising an actuating mechanism (31).

7. An assembly method for a door arrangement (1), in particular as claimed in one of the preceding claims, a first door module (21) being fastened releasably to a first carrier element (20) in a first position by means of fastening means (22) in a first assembly step, a second door module (42) being fastened to a second carrier element (20) in a second assembly step, and a first coupling element (24) of the first door module (21) being coupled to a second coupling element (44) of the second door module (42) in a third assembly step, **characterized in that**, in a fourth assembly step, the fastening means (22) are released by unlocking elements (42) on the second door module (40), and the first door module (20) is positioned in a second position which is different than the first position.

8. The assembly method as claimed in claim 7, **characterized in that**, in the fourth assembly step, the first door module (21) is brought out of engagement with the fastening means (22) and is fixed in the second position by the second door module (41), the first door module (21) preferably being fixed by the coupling of the first coupling element (24, 24') with the second coupling element (44, 44') on the second door module (41).

9. The assembly method as claimed in either of claims 7 and 8, **characterized in that**, in the third and in the fourth assembly step, the second carrier element (40) is moved perpendicularly with respect to a door plane (100) in the direction of the first carrier element (20) and/or, in a fifth assembly step which follows the fourth assembly step, the second carrier element (40) is connected to the first carrier element (20), in particular releasably.

10. The assembly method as claimed in one of claims 7 to 9, **characterized in that**, in the fourth assembly step, a movement is carried out by the first door module (21) perpendicularly with respect to the door plane (100) and, in particular, in the direction of the first carrier element (20).

11. The assembly method as claimed in one of claims 7 to 10, **characterized in that**, in the third assembly step, a functional connection is produced between the first and the second door module (21, 41).

## Revendications

1. Agencement de portière (1) comprenant un premier élément de support (20) et un deuxième élément de support (40), le premier élément de support (20) présentant un premier module de portière (21) et le deuxième élément de support (40) présentant un deuxième module de portière (41), le premier module de portière (21) étant fixé de manière détachable au premier élément de support (20) par le biais de moyens de fixation (22), le premier module de portière (21) présentant un premier élément d'accouplement (24, 24') et le deuxième module de portière (41) présentant un deuxième élément d'accouplement (44, 44'), **caractérisé en ce que** le deuxième module de portière (41) présente des éléments de déverrouillage (42) qui sont prévus pour libérer les moyens de fixation (22) dans le cas d'un accouplement du premier élément d'accouplement (24, 24') avec le deuxième élément d'accouplement (44, 44').

2. Agencement de portière (1) selon la revendication 1, **caractérisé en ce que** les moyens de fixation (22) comprennent des premiers et deuxièmes modules de fixation (25, 26), les premiers modules de fixation (25) pour la fixation du premier module de portière (21) étant prévus parallèlement à un plan de la portière (100) et les deuxièmes modules de fixation (26) pour la fixation du premier module de portière (21) étant prévus perpendiculairement au plan de la portière (100), et de préférence les éléments de déverrouillage (42) étant prévus pour libérer les deuxièmes modules de fixation (26) et particulièrement préférablement une suppression de la fixation du premier module de portière (21) par les premiers modules de fixation (25) étant prévue dans le cas d'une libération des deuxièmes modules de fixation (26).

3. Agencement de portière (1) selon la revendication 2, **caractérisé en ce que** les deuxièmes modules de fixation (26) comprennent au moins un bras d'encliquetage (27) fixé sur le premier élément de support (20), lequel peut être amené en engagement d'encliquetage avec un élément d'encliquetage (29) sur le premier module de portière (21), et les éléments de déverrouillage (42) comprenant au moins une rampe (42') qui est prévue pour faire fléchir le bras d'encliquetage (27) en cas d'accouplement.

4. Agencement de portière (1) selon l'une quelconque des revendications 2 ou 3, **caractérisé en ce que** les premiers modules de fixation (25) sont réalisés essentiellement sous forme de cônes au moins ouverts partiellement (25'), qui sont fixés de préférence au premier élément de support (20) par leur surface de base et qui sont prévus pour recevoir des éléments de fixation (29') du premier module de portière (21).

5. Agencement de portière (1) selon l'une quelconque des revendications précédentes, **caractérisé en ce que** des premiers éléments de guidage (28) sont disposés sur le premier module de portière (21) et des deuxièmes éléments de guidage (48) sont disposés sur le deuxième module de portière (41), et de préférence dans le cas d'un accouplement, un engagement les uns dans les autres des premiers et deuxièmes éléments de guidage (28, 48) étant prévu pour la fixation de la position relative du premier et du deuxième élément de support (20, 40) parallèlement au plan de la portière (100), et les premiers et deuxièmes éléments de guidage (28, 48) étant prévus particulièrement préférablement en vue du montage s'autoajustant du deuxième élément de support (40) sur le premier élément de support (20) perpendiculairement au plan de la portière (100).

6. Agencement de portière (1) selon l'une quelconque des revendications précédentes, **caractérisé en ce que** le deuxième élément de support (40) comprend une partie d'habillage interne (52) et le deuxième module de portière (41) comprend au moins une poignée de portière (50), et de préférence le premier élément de support (20) comprenant un support d'unité (20') et le premier module de portière (21) comprenant un mécanisme d'actionnement (31).

7. Procédé de montage pour un agencement de portière (1), en particulier selon l'une quelconque des revendications précédentes, dans lequel, dans une première étape de montage, un premier module de portière (21) est fixé par le biais de moyens de fixation (22) de manière détachable à un premier élément de support (20) dans une première position, dans une deuxième étape de montage, un deuxième module de portière (42) étant fixé à un deuxième élément de support (20) et dans une troisième étape de montage, un premier élément d'accouplement (24) du premier module de portière (21) étant accouplé à un deuxième élément d'accouplement (44) du deuxième module de portière (42), **caractérisé en ce que** dans une quatrième étape de montage, les moyens de fixation (22) sont libérés par des éléments de déverrouillage (42) sur le deuxième module de portière (40) et le premier module de portière (20) est positionné dans une deuxième position différente de la première position.

8. Procédé de montage selon la revendication 7, **caractérisé en ce que** le premier module de portière (21), dans la quatrième étape de montage, est amené hors d'engagement avec les moyens de fixation (22) et est fixé par le deuxième module de portière (41) dans la deuxième position, et de préférence le premier module de portière (21) est fixé par l'accouplement du premier élément d'accouplement (24, 24') avec le deuxième élément d'accouplement (44, 44') au deuxième module de portière (41).

9. Procédé de montage selon l'une quelconque des revendications 7 ou 8, **caractérisé en ce que** dans la troisième et dans la quatrième étape de montage, le deuxième élément de support (40) est déplacé perpendiculairement à un plan de portière (100) dans la direction du premier élément de support (20) et/ou dans une cinquième étape de montage suivant la quatrième étape de montage, le deuxième élément de support (40) est connecté notamment de manière détachable au premier élément de support (20).

10. Procédé de montage selon l'une quelconque des revendications 7 à 9, **caractérisé en ce que** dans la quatrième étape de montage, le premier module de portière (21) effectue un mouvement perpendiculairement au plan de portière (100) et notamment dans la direction du premier élément de support (20).

11. Procédé de montage selon l'une quelconque des revendications 7 à 10, **caractérisé en ce que** dans la troisième étape de montage, une connexion fonctionnelle est établie entre le premier et le deuxième module de portière (21, 41).
